# EUROPÄISCHE PATENTSCHRIFT

(11) **EP 2 781 933 B1**
(45) Veröffentlichungstag und Bekanntmachung des Hinweises auf die Patenterteilung: **28.03.2018**
(21) Anmeldenummer: 14152579.0
(22) Anmeldetag: 27.01.2014
(51) Int. Cl.: G01S 17/42, G02B 7/28, G01S 7/497, G01S 7/481

(54) **Optischer Sensor**
Optical sensor
Capteur optique

(30) Priorität: 18.03.2013 DE 102013102741
(43) Veröffentlichungstag der Anmeldung: 24.09.2014
(73) Patentinhaber: Leuze electronic GmbH + Co KG, 73277 Owen/Teck (DE)
(72) Erfinder: Lohmann Dr., Lutz, 82140 Olching (DE); Luthard, Stephan, 82256 Fürstenfeldbruck (DE)
(74) Vertreter: Ruckh, Rainer Gerhard

(56) Entgegenhaltungen:
- DE-A1- 10 157 378
- DE-A1-102010 022 159
- GB-A- 2 182 457
- JP-A- H10 133 087
- US-A1- 2009 109 426

## Beschreibung

Die Erfindung betrifft einen optischen Sensor gemäß dem Oberbegriff des Anspruchs 1.

Ein derartiger optischer Sensor ist aus der DE 10 2010 022 159 A1 bekannt.

Der dort beschriebene optische Sensor dient zur Erfassung von Objekten innerhalb eines Überwachungsbereichs und umfasst eine innerhalb eines Gehäuses angeordnete, um eine Drehachse drehbare Sende-/Empfangseinheit. Die Sende-/Empfangseinheit umfasst einen emittierenden Sender und einen Empfangslichtstrahlen empfangenden Empfänger. Die Sendelichtstrahlen und/oder die Empfangslichtstrahlen sind durch ein Fenster des Gehäuses geführt, welches ein optisches Mittel zur Strahlformung der Sendelichtstrahlen und/oder Empfangslichtstrahlen bildet.

Ein Vorteil dieses optischen Sensors besteht darin, dass die rotierende Sende-/Empfangseinheit mit ihrem Sender und Empfänger dicht an das Fenster eines Gehäuses herangeführt sein kann. Der Lichtweg der Sendelichtstrahlen und Empfangslichtstrahlen zwischen Sende-/Empfangseinheit und Fenster, der nicht durch einen Tubus oder dergleichen geschützt ist, kann daher sehr klein dimensioniert werden, so dass nahezu keine Verluste durch interne Reflexionen des Sendelichtstrahls und Empfangslichtstrahls innerhalb des Gehäuses auftreten. Weiterhin ist vorteilhaft, dass auf eine separate Ablenkeinheit verzichtet werden kann. Dadurch kann einerseits die Baugröße des optischen Sensors erheblich verringert werden. Zudem werden unerwünschte Deformationen der Strahlquerschnitte des Sendelichtstrahls und Empfangslichtstrahls, die bei der Reflexion an einer Ablenkeinheit entstehen würden, vermieden.

Um eine gleichbleibend hohe Nachweisempfindlichkeit und Messgenauigkeit bei einem derartigen optischen Sensor zu gewährleisten, muss der Strahlengang des Sendelichtstrahls und des Empfangslichtstrahls exakt ausgerichtet sein. Um dies zu erreichen, müssen die optischen Funktionselemente zur Ausbildung sehr präzise ausgeführt und exakt in angegebenen Positionen zueinander angeordnet sein. Zu diesen optischen Funktionselementen gehören die optoelektronischen Elemente des Optikelements, nämlich ein Sendelichtstrahlen emittierender Sender und ein Empfangslichtstrahlen empfangender Empfänger. Weitere optische Funktionselemente und Optikelemente sind Linsen und Umlenkspiegel, die zur Strahlformung oder Umlenkung der Sendelichtstrahlen oder Empfangslichtstrahlen dienen. Schließlich gehören auch Optiktuben zu derartigen optischen Funktionselementen.

Bedingt durch wirkende Fliehkräfte bei der Rotation des Sende-/Empfangselements oder auch bedingt durch Temperaturänderungen können sich einzelne optische Funktionselemente in ihrer Form, Größe oder Position ändern. Dies beeinflusst den Strahlengang der Sendelichtstrahlen und Empfangslichtstrahlen und führt zu einer unerwünschten Reduzierung der Nachweisempfindlichkeit bzw. Messgenauigkeit des optischen Sensors.

Die US 2009/0109426 A1 betrifft einen scannenden Lasersensor. Bei diesem Sensor werden durch thermische Ausdehnungen von Komponenten bedingte Parameteränderungen mit Hilfe von Daten eines Temperatursensors rechnerisch kompensiert.

Die JP H10133087 A beschreibt eine passive Kompensation von temperaturbedingten Fokuslageänderungen eines optischen Systems mit einer Linse und einem Detektor. Die Kompensation erfolgt mittels zweier Kompensationsbauteile, die definierte temperaturabhängige Längenausdehnungskoeffizienten aufweisen.

Der Erfindung liegt die Aufgabe zugrunde, einen optischen Sensor der eingangs genannten Art bereitzustellen, welcher bei möglichst einfachem Aufbau auch bei Einfluss äußerer Störgrößen eine gleichbleibend hohe Nachweisempfindlichkeit aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben. Der optische Sensor dient zur Erfassung von Objekten innerhalb eines Überwachungsbereichs und besteht aus einer innerhalb eines Gehäuses angeordneten, um eine Drehachse drehbaren Sende-/Empfangseinheit. Der optische Sensor umfasst einen Sendelichtstrahlen emittierenden Sender, einen Empfangslichtstrahlen empfangenden Empfänger, und ein Ausgleichselement. Eine Änderung der optischen Funktion eines ersten optischen Funktionselements des optischen Sensors, welches durch eine fliehkraftbedingte Änderung der Form und/oder der Größe und/oder der Position des ersten optischen Funktionselements bedingt ist, wird durch eine Stellbewegung des Ausgleichselements, mittels dessen die Position und/oder Form desselben oder eines weiteren optischen Funktionselements des optischen Senders geändert ist, kompensiert. Dabei ist das Ausgleichselement ein Fliehkraftausgleichselement, welches bei Auftreten von Fliehkräften eine definierte Längenänderung erfahrt. Mit dem erfindungsgemäßen Ausgleichselement können gezielt und reproduzierbar durch äußere Störgrößen wie Fliehkräfte bewirkte Änderungen von optischen Funktionen von optischen Funktionselementen des optischen Sensors, welche zu einer Beeinträchtigung des Strahlengangs der Sendelichtstrahlen und Empfangslichtstrahlen führen, kompensiert werden. Damit werden unerwünschte Beeinträchtigungen der Nachweisempfindlichkeit und der Messgenauigkeit des optischen Sensors vermieden.

Besonders vorteilhaft hierbei ist, dass mit dem erfindungsgemäßen Ausgleichselement eine Kompensationsvorrichtung bereitgestellt wird, mittels derer unterschiedliche Änderungen im optischen Funktionselement aufgrund von einwirkenden Fliehkräften kompensiert werden können. So können mit der Kompensationsvorrichtung sowohl Positions- als auch Größen und Formänderungen am optischen Funktionselement kompensiert werden.

Weiterhin ist vorteilhaft, dass auch die optischen Funktionselemente, deren störungsbedingte Funktionsänderungen kompensiert werden, unterschiedlich ausgebildet sein können, d.h. mit der Kompensationsvorrichtung können Funktionsänderungen verschiedenartiger optischer Funktionselemente kompensiert werden.

Dabei kann jedes optische Funktionselement von einem Optiktubus, einem Optikelement oder einem optoelektronischen Element gebildet sein.

Insbesondere ist ein Optikelement aus wenigstens einer Linse oder wenigstens einem Umlenkspiegel gebildet. Ein optoelektronisches Element ist aus einem Sendelichtstrahlen emittierenden Sender oder einem Empfangslichtstrahlen empfangenden Empfänger gebildet.

Gemäß einer vorteilhaften Ausgestaltung der Erfindung ist das Ausgleichselement an einem Ende an einer ersten Aufnahme fest gelagert und an einem zweiten Ende lose gelagert, wodurch dieses Ausgleichselement durch eine Längenänderung eine Stellbewegung durchführen kann.

Zudem ist das Ausgleichselement mit dem ersten oder dem zweiten optischen Funktionselement fest verbunden.

Dabei ist das Ausgleichselement ein Fliehkraftausgleichselement, welches bei Auftreten von Fliehkräften eine definierte Längenänderung erfährt.

Das Fliehkraftausgleichselement kann aus einem scherenförmigen Element bestehen, dessen Arme bei Auftreten von Fliehkräften definiert ausgedehnt werden.

Die Kompensationsvorrichtung mit dem Ausgleichselement kann allgemein so aufgebaut sein, dass mit dem Ausgleichselement das optische Funktionselement, an welchem die störungsbedingte Änderung der Funktion auftritt, sich selbst in seiner Position verändert. Alternativ kann eine störungsbedingte Änderung der Funktion eines optischen Funktionselements dadurch kompensiert werden, dass mit dem Ausgleichselement ein anderes optisches Funktionselement verstellt wird.

Dies wird im Folgenden anhand eines Beispiels erläutert, bei welchem ein erstes optisches Funktionselement von einem Hohlspiegel gebildet ist, der Empfangslichtstrahlen auf einen Empfänger als zweites optisches Funktionselement fokussiert. Im störungsfreien Zustand ist der Empfänger im Brennpunkt des Hohlspiegels angeordnet. Bei Auftreten von Fliehkräften kann beispielsweise die Krümmung des Hohlspiegels geändert werden, so dass der Brennpunkt verschoben ist und damit der Empfänger außerhalb des Brennpunkts liegt.

Eine erste Möglichkeit der Kompensation dieses Störeffekts besteht darin, den Hohlspiegel selbst auf ein Ausgleichselement, in diesem Fall ein Fliehkraftausgleichselement anzuordnen, wobei durch eine Stellbewegung des Ausgleichselements der Hohlspiegel so verschoben wird, dass der Empfänger wieder im Brennpunkt des Hohlspiegels liegt.

Eine zweite Möglichkeit der Kompensation des Störeffekts besteht darin, den Empfänger auf dem Ausgleichselement zu lagern, so dass bei einer Brennweitenänderung des Hohlspiegels aufgrund auftretender Fliehkräfte der Empfänger mittels des Ausgleichselements wieder in den Brennpunkt des Hohlspiegels geschoben wird.

Gemäß einer vorteilhaften Ausgestaltung der Erfindung ist der optische Sensor als Sicherheitssensor ausgebildet, d.h. der optische Sensor erfüllt die Sicherheitsanforderungen für einen Einsatz im Personenschutz. Zur Erfüllung der Sicherheitsanforderungen weist der optische Sensor insbesondere eine redundant aufgebaute Auswerteeinheit auf, die zur Auswertung der in der Sende-/Empfangseinheit generischen Signale dient. Die redundante Auswerteeinheit kann beispielsweise aus zwei sich zyklisch gegenseitig überwachenden Rechnereinheiten gebildet sein.

Die Erfindung wird im Folgenden anhand der Zeichnungen erläutert. Es zeigen:
- Figur 1:: Schematische Darstellung eines Ausführungsbeispiels des erfindungsgemäßen optischen Sensors.
- Figur 2:: Einzeldarstellung der Sende-/Empfangseinheit für den optischen Sensor gemäß Figur 1.
- Figur 3:: Ausführungsbeispiel einer Kompensationsvorrichtung mit einem Ausgleichselement für den optischen Sensor gemäß Figur 1.

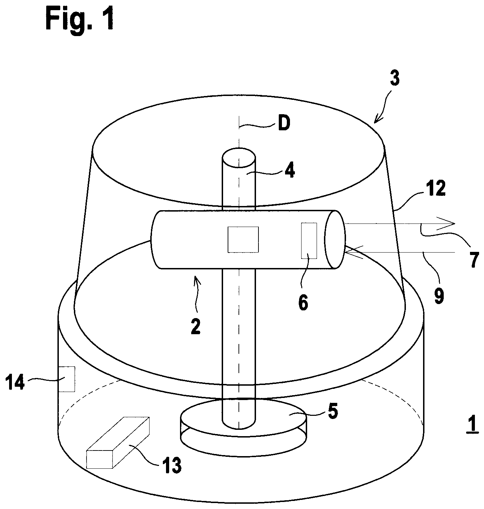

Figur 1 zeigt schematisch den Aufbau eines optischen Sensors 1 für eine Objektdetektion in einem Überwachungsbereich. Der optische Sensor 1 weist einen um eine Drehachse D drehbaren Messkopf 2 auf, der in einem ortsfesten, das heißt nicht mitdrehenden Gehäuse 3 angeordnet ist. Der Messkopf 2 ist auf einer entlang der Drehachse D verlaufenden Welle 4 gelagert, die mittels eines Antriebs 5 in eine Drehbewegung versetzt wird. Der Antrieb 5 umfasst einen Elektromotor mit einem ortsfest angeordneten Stator und einem mit der Welle 4 mitrotierenden Rotor. Während der mit dem Messkopf 2 durchgeführten Objektdetektion dreht sich dieser mit einer konstanten Drehzahl. Die aktuelle Drehposition des Messkopfes 2 wird mit einem Messgeber, insbesondere einem Winkelgeber, erfasst.

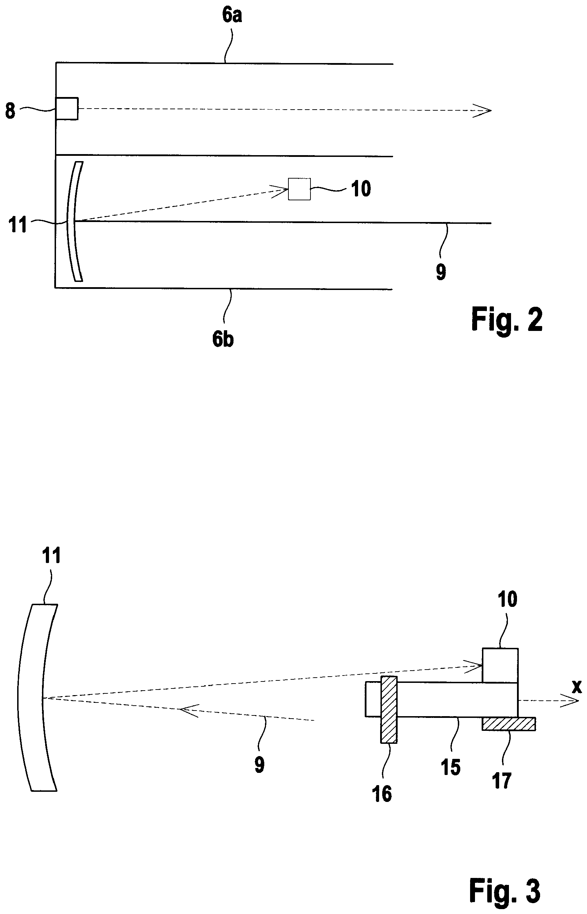

In dem Messkopf 2 ist eine Sende-/Empfangseinheit 6 integriert, welche ein optisches Distanzsensorelement bildet. Die einzelnen Komponenten der Sende-/Empfangseinheit 6 sind in Figur 2 dargestellt.

Die Sende-/Empfangseinheit 6 umfasst einen Sendelichtstrahlen 7 emittierenden Sender 8 in Form einer Laserdiode. Der Laserdiode kann unmittelbar eine nicht gesondert dargestellte Sendeoptik in Strahlrichtung der Sendelichtstrahlen 7 nachgeordnet sein. Der Sender 8 ist in einem ersten Optiktubus 6a der Sende-/Empfangseinheit angeordnet. Die Sende-/Empfangseinheit 6 umfasst weiter einen Empfangslichtstrahlen 9 empfangenden Empfänger 10 in Form einer Photodiode oder dergleichen. Die Empfangslichtstrahlen 9 werden über einen Hohlspiegel 11 zum Empfänger 10 umgelenkt und auf diesen fokussiert. Der Empfänger 10 ist mit dem Hohlspiegel 11 in einem zweiten Optiktubus 6b integriert.

Wie aus Figur 1 ersichtlich, werden die Sendelichtstrahlen 7 und Empfangslichtstrahlen 9 durch einen Abschnitt des Gehäuses 3 geführt, welcher ein Fenster 12 bildet. Das Fenster 12 erstreckt sich in Umfangsrichtung des Gehäuses 3 um den vollen Winkelbereich von 360°. Durch die Drehbewegung des Messkopfes 2 werden die Sendelichtstrahlen 7 periodisch über den gesamten Winkelbereich von 360° geführt, so dass dieser Bereich auch den Überwachungsbereich bildet, innerhalb dessen eine Objektdetektion erfolgt. Durch die Distanzmessung und die gleichzeitige Erfassung der aktuellen Drehposition des Messkopfes 2 können bei der Objektdetektion die genauen Objektpositionen ermittelt werden.

Die mit der Sende- /Empfangseinheit 6 durchgeführten Distanzmessungen erfolgen nach einem Lichtlaufzeitverfahren. Hierzu emittiert der Sender 8 Sendelichtstrahlen 7 in Form von Sendelichtpulsen. Zur Distanzbestimmung werden die Lichtlaufzeiten gemessen, die jeweils ein Sendelichtpuls zu einem zu detektierenden Objekt 13 und zurück zum Empfänger 8 benötigt. Die entsprechenden Strahlengänge zeigen die Figuren 2 und 3. Die vom Sender 8 emittierten Sendelichtstrahlen 7 durchsetzen das Fenster 12 und verlaufen dann im Überwachungsbereich. Dort werden die Sendelichtstrahlen 7 von einem nicht dargestellten Objekt reflektiert und werden als Empfangslichtstrahlen 9 durch das Fenster 12 zurück auf den Empfänger 10 geführt.

Zur Auswertung der in der Sende-/Empfangseinheit 6 generierten Signale ist im optischen Sensor 1 eine Auswerteinheit 13 vorgesehen. Zur Erfüllung der Anforderungen für den Einsatz im Bereich des Personenschutzes sind diese zweikanalig ausgebildet, insbesondere in Form sich gegenseitig zyklisch überwachender Rechnereinheiten.

In der Auswerteeinheit 13 wird in Abhängigkeit der Signale der Sende-/Empfangseinheit 6 ein Schaltsignal generiert und über einen Schaltausgang 14 ausgegeben. Bei einem Einsatz im Bereich der Sicherheitstechnik wird mit dem optischen Sensor 1 ein Gefahrenbereich an einer Anlage überwacht. Wird mit dem optischen Sensor 1 kein Objekt erkannt und wird eine fehlerfreie Funktion des optischen Sensors 1 durch die interne Geräteprüfung festgestellt, so wird über den Schaltausgang 14 ein Freigabesignal ausgegeben, das die Anlage in Betrieb setzt. Wird dagegen im optischen Sensor 1 eine interne Fehlfunktion festgestellt, oder es wird ein Objekt im Gefahrenbereich detektiert, so wird über den Schaltausgang ein Abschaltbefehl ausgegeben, durch welchen die Anlage stillgesetzt wird.

Bedingt durch auf die Sende-/Empfangseinheit 6 einwirkende Fliehkräfte und/oder durch Temperaturänderungen können sich die Größen, Formen und/oder Positionen von optischen Funktionselementen der Sende-/Empfangseinheit 6 ändern, was zu einer Änderung des Strahlengangs der Sendelichtstrahlen 7 und der Empfangslichtstrahlen 9 führt und damit zu einer Beeinträchtigung der Nachweisempfindlichkeit des optischen Sensors 1. Derartige optische Funktionselemente können die Optiktuben 6a und 6b, der Sender 8, der Empfänger 10 sowie diesen zugewandte Optikelemente sein.

Im vorliegenden Fall ist der Hohlspiegel 11 das einzige oder vorwiegend durch derartige Störeinflüsse beeinflusste Optikelement.

Bedingt durch Temperaturänderungen ändert sich die Krümmung des Hohlspiegels 11 und damit auch dessen Brennweite. Während bei einer Solltemperatur der Empfänger 10 korrekt im Brennpunkt des Hohlspiegels 11 liegt, ist dies bei auftretenden Temperaturänderungen nicht mehr der Fall.

Um diesen Störeffekt zu kompensieren, ist die in Figur 3 dargestellte Kompensationsvorrichtung vorgesehen. Die Kompensationsvorrichtung weist ein Ausgleichselement 15 auf, auf welchem der Empfänger 10 befestigt ist. Generell wird mit dem Ausgleichselement 15 eine Ausgleichsbewegung ermöglicht, mittels derer die Brennweitenänderung des Hohlspiegels 11 kompensiert werden kann.

Das Ausgleichselement 15 ist als Temperaturausgleichselement ausgebildet. Die Längsachse des stab- bzw. linienförmig ausgebildeten Temperaturausgleichselements erstreckt sich längs einer Geraden. Das Temperaturausgleichselement besteht aus einem Metall oder einem Bimetall und weist somit einen von der Temperatur abhängigen Längenausdehnungskoeffizienten auf.

Das Ausgleichselement 15 ist an einem längsseitigen Ende mittels einem ersten Befestigungselement 16 beispielsweise am Optiktubus 6b fest verankert. An einem zweiten Befestigungselement 17 liegt das Ausgleichselement 15 lose auf und ist somit dort in dessen Längsrichtung beweglich gelagert.

Tritt in der Sende-/Empfangseinheit 6 eine Temperaturerhöhung über die Solltemperatur hinaus auf, so wird die Krümmung und damit der Brennpunkt auf der Ebene verändert. Der Empfänger 10 wird durch die Ausgleichsbewegung des Ausgleichselements 15 auf den geänderten Brennpunkt nachgeführt, da sich durch die Temperaturerhöhung das Ausgleichselement 15 in der in Figur 3 mit X bezeichneten Richtung ausgedehnt. Damit wurde die durch Störeinflüsse bedingte Änderung der optischen Funktion des als Hohlspiegel 11 ausgebildeten optischen Funktionselements durch das Ausgleichselement 15 völlig kompensiert.

### Bezugszeichenliste

- (1): Optischer Sensor
- (2): Messkopf
- (3): Gehäuse
- (4): Welle
- (5): Antrieb
- (6): Sende-/Empfangseinheit
- (6a): Optiktubus
- (6b): Optiktubus
- (7): Sendelichtstrahlen
- (8): Sender
- (9): Empfangslichtstrahlen
- (10): Empfänger
- (11): Hohlspiegel
- (12): Fenster
- (13): Auswerteeinheit
- (14): Schaltausgang
- (15): Ausgleichselement
- (16): Befestigungselement
- (17): Befestigungselement
- (D): Drehachse

## Patentansprüche

1. Optischer Sensor (1) zur Erfassung von Objekten innerhalb eines Überwachungsbereichs, mit einer innerhalb eines Gehäuses (3) angeordneten, um eine Drehachse (D) drehbaren Sende-/Empfangseinheit (6), umfassend einen Sendelichtstrahlen (7) emittierenden Sender (8) und einen Empfangslichtstrahlen (9) empfangenden Empfänger (10), **dadurch gekennzeichnet, dass** der optische Sensor (1) ein Ausgleichselement umfasst, wobei eine Änderung der optischen Funktion eines ersten optisches Funktionselements des optischen Sensors (1) welches durch eine fliehkraftbedingte Änderung der Form und/oder der Größe und/oder der Position des ersten optischen Funktionselements bedingt ist, durch eine Stellbewegung des Ausgleichselements (15), mittels dessen die Position und/oder Form desselben oder eines weiteren optischen Funktionselements des optischen Sensors (1) geändert ist, kompensiert wird, wobei dass das Ausgleichselement (15) ein Fliehkraftausgleichselement ist, welches bei Auftreten von Fliehkräften eine definierte Längenänderung erfährt.

2. Optischer Sensor nach Anspruch 1, **dadurch gekennzeichnet, dass** das oder jedes optische Funktionselement von einem Optiktubus (6a und 6b), einem Optikelement oder einem optoelektronischen Element gebildet ist.

3. Optischer Sensor nach Anspruch 2, **dadurch gekennzeichnet, dass** ein Optikelement aus wenigstens einer Linse oder wenigstens einem Umlenkspiegel gebildet ist, und dass ein optoelektronisches Element aus einem Sendelichtstrahlen (7) emittierenden Sender (8) oder einem Empfangslichtstrahlen (9) empfangenden Empfänger (10) gebildet ist.

4. Optischer Sensor nach einem der Ansprüche 1 - 3, **dadurch gekennzeichnet, dass** das Ausgleichselement (15) mit dem ersten oder dem zweiten optischen Funktionselement fest verbunden ist.

5. Optischer Sensor nach Anspruch 4, **dadurch gekennzeichnet, dass** das Ausgleichselement (15) an einem Ende an einer ersten Aufnahme fest gelagert ist und an einem zweiten Ende lose gelagert ist, wodurch dieses Ausgleichselement (15) durch eine Längenänderung eine Stellbewegung durchführen kann.

6. Optischer Sensor nach einem der Ansprüche 1 - 5, **dadurch gekennzeichnet, dass** die Sende-/Empfangseinheit (6) Bestandteil eines rotierenden Messkopfes (2) ist, der drehbar auf einem stationären Teil des optischen Sensors (1) gelagert ist.

7. Optischer Sensor nach einem der Ansprüche 1 - 6, **dadurch gekennzeichnet, dass** das Ausgleichselement (15) auf dem rotierenden Messkopf (2) vorgesehen ist.

8. Optischer Sensor nach einem der Ansprüche 1 - 7, **dadurch gekennzeichnet, dass** dieser ein Sicherheitssensor ist.

## Claims

1. Optical sensor (1) for detecting objects within a monitoring region, with a transmitting/receiving unit (6) which is arranged within a housing (3) and rotatable about an axis (D) of rotation and which comprises a transmitter (8) emitting transmitted light beams (7) and a receiver (10) receiving received light beams (9), **characterised in that** the optical sensor (1) comprises a compensating element, wherein compensation is provided for a change of the optical function of a first optical function element of the optical sensor (1), which is caused by a centrifugal-force-induced change in the shape and/or size and/or position of the first optical function element, by a setting movement of the compensating element (15), by means of which the position and/or shape of the same or of a further optical function element of the optical sensor (1) is changed, wherein the compensating element (15) is a centrifugal-force compensating element which undergoes a defined change in length when centrifugal forces occur.

2. Optical sensor according to claim 1, **characterised in that** the or each optical function element is formed by an optical tube (6a and 6b), an optical element or an optoelectronic element.

3. Optical sensor according to claim 2, **characterised in that** an optical element is formed from at least one lens or at least one deflecting mirror and that an optoelectronic element is formed from a transmitter (8) emitting transmitted light beams (7) or a receiver (10) receiving received light beams (9).

4. Optical sensor according to any one of claims 1 to 3, **characterised in that** the compensating element (15) is fixedly connected with the first or the second optical function element.

5. Optical sensor according to claim 4, **characterised in that** the compensating element (15) is fixedly mounted at one end at a first mount and movably mounted at a second end, whereby this compensating element (15) can execute a setting movement through a change in length.

6. Optical sensor according to any one of claims 1 to 5, **characterised in that** the transmitting/receiving unit (6) is a component of a rotating measuring head (2) rotatably mounted on a stationary part of the optical sensor (1).

7. Optical sensor according to any one of claims 1 to 6, **characterised in that** the compensating element (15) is provided on the rotating measuring head (2).

8. Optical sensor according to any one of claims 1 to 7, **characterised in that** this is a security sensor.

## Revendications

1. Capteur optique (1) pour détecter des objets à l'intérieur d'une zone de surveillance, avec une unité d'émission/réception (6) disposée à l'intérieur d'un boîtier (3), pouvant tourner autour d'un axe de rotation (D), comprenant un émetteur (8) émettant des rayons lumineux d'émission (7) et un récepteur (10) recevant des rayons lumineux de réception (9), **caractérisé en ce que** le capteur optique (1) comprend un élément de compensation, un changement de la fonction optique d'un premier élément fonctionnel optique du capteur optique (1), lequel est provoqué par un changement dû à la force centrifuge de la forme et/ou de la taille et/ou de la position du premier élément fonctionnel optique, étant compensé par un mouvement de réglage de l'élément de compensation (15), au moyen duquel la position et/ou la forme de celui-ci ou d'un autre élément fonctionnel optique du capteur optique (1) sont modifiées, l'élément de compensation (15) étant un élément de compensation centrifuge qui subit un changement de longueur défini lors de l'apparition de forces centrifuges.

2. Capteur optique selon la revendication 1, **caractérisé en ce que** le ou chaque élément fonctionnel optique est formé d'un tube optique (6a et 6b), d'un élément optique ou d'un élément optoélectronique.

3. Capteur optique selon la revendication 2, **caractérisé en ce qu'**un élément optique est formé au moins d'une lentille ou au moins d'un miroir de déviation, et qu'un élément optoélectronique est formé d'un émetteur (8) émettant des rayons lumineux d'émission (7) ou d'un récepteur (10) recevant des rayons lumineux de réception (9).

4. Capteur optique selon l'une des revendications 1 à 3, **caractérisé en ce que** l'élément de compensation (15) est relié solidement au premier ou au deuxième élément fonctionnel optique.

5. Capteur optique selon la revendication 4, **caractérisé en ce que** l'élément de compensation (15) est monté solidement à une extrémité à un premier logement et monté lâchement à une deuxième extrémité, de sorte que cet élément de compensation (15) peut effectuer un mouvement de réglage par un changement de longueur.

6. Capteur optique selon l'une des revendications 1 à 5, **caractérisé en ce que** l'unité d'émission/réception (6) est un élément constitutif d'une tête de mesure rotative (2) qui est montée tournante sur une partie fixe du capteur optique (1).

7. Capteur optique selon l'une des revendications 1 à 6, **caractérisé en ce que** l'élément de compensation (15) est prévu sur la tête de mesure rotative (2).

8. Capteur optique selon l'une des revendications 1 à 7, **caractérisé en ce que** celui-ci est un capteur de sécurité.
